# EUROPEAN PATENT APPLICATION

(11) **EP 4 575 687 A1**
(43) Date of publication of application: **25.06.2025**
(21) Application number: 23307372.5
(22) Date of filing: 22.12.2023
(51) Int. Cl.: G05B 19/418, G05B 19/414

(54) **DISTRIBUTED INDUSTRIAL AUTOMATION SYSTEMS**

(71) Applicant: SCHNEIDER ELECTRIC INDUSTRIES SAS, 92500 Rueil-Malmaison (FR)
(72) Inventor: BRÜCK, Antoine, 06670 La Roquette-Sur-Var (FR); SCHMIDLIN, Raul, 63796 Kahl Am Main (DE); HERRKLOTZ, Ricardo, 92500 Rueil Malmaison (FR)
(74) Representative: Plasseraud IP

(57) **Abstract**

Examples include automation system comprising a first controller, a second controller, at least an automation device, and a fieldbus;
wherein the automation system is configured to determine motion data of a plurality of axes associated with the at least an automation device; and
wherein, during a given cycle of the fieldbus:
- the first controller is configured to determine motion data of a first axis of the plurality of axes; to transmit the motion data of the first axis to the second controller; and to transmit a trigger event enabling the second controller to start determining motion data of a second axis of the plurality of axes; and

upon receiving the trigger event, the second controller is configured to determine the motion data of the second axis based on the motion data of the first axis.

## Description

### BACKGROUND

Industrial automation systems generally comprise highly technical devices manufactured by several industrial companies which must be controlled together in real-time. However, the configuration of the devices, which is generally a software-implemented configuration, may be based on different programming languages and/or on different software development platforms (or integrated development platforms). Hence, the control of an automation system is a complex challenge.

Moreover, automation systems can be distributed. This means that the control of the automation system is no more ensured by a unique supervisory control device, or controller, but is distributed over several control devices, i.e. over several programmable automation controllers, which renders the control of the distributed automation systems even more challenging.

The present disclosure improves the current situation.

### BRIEF DESCRIPTION OF THE DRAWINGS

Figure 1 schematically illustrates an example of an automation system.
Figure 2 schematically illustrates another example of an automation system.
Figure 3 schematically illustrates yet another example of an automation system.
Figure 4 schematically illustrates an example of a computer-implemented method.

### DETAILED DESCRIPTION

In industrial distributed automation applications, the inventors have noticed that the determination of the motion data of the axes of an automation system, when the motion data are determined by different programmable automation controllers (PAC), may induce delay, which could be prejudicial for the application.

The motion data of an axis may comprise at least one of the following elements: a position, a velocity, an acceleration, a deceleration, a jerk, and a direction of the axis.

The inventors have especially noticed that, during a given fieldbus cycle, each PAC determines motion data associated with its own axis without sharing its computed motion data to the other PACs before the next fieldbus cycle. Hence, during a fieldbus cycle C1, when motion data associated with a second axis and determined by a second PAC should be computed considering the motion data of a first axis determined by a first PAC during the same fieldbus cycle C1, the motion data of the second axis can only be validly computed at the next fieldbus cycle, i.e. at cycle C2 in which the motion data of the first axis is available for the second PAC. This induces a delay. It should be noted that the delay is propagated if others motion data, for example motion data associated with a third axis and computed by a third PAC, can only be validly computed by considering the motion data of the second axis, determined at cycle C2. That is, the motion data associated with the third axis will be validly computed at the fieldbus cycle, C3, when the motion data of the second axis will be available for the third PAC. Hence, in a worst-case scenario, a delay before validly determining given motion data associated with a given axis may correspond to n fieldbus cycles if the given motion data requires n other sets of motion data to be validly determined.

Motion data of a given axis of an automation system which are validly determined should be understood in the present disclosure as motion data which do not have to be corrected in view of any other motion data of other axes of the automation system to be applied on the given axis to permit a correct control of the automation system.

The present disclosure proposes a solution allowing to validly determine motion data of two axes in a distributed automation system in a same fieldbus cycle, i.e. without induces any delay. The solution of the present disclosure is presented for two axes but can be applied for n axes with n different controllers determining each a set of motion data associated with a respective axis, in a same fieldbus cycle.

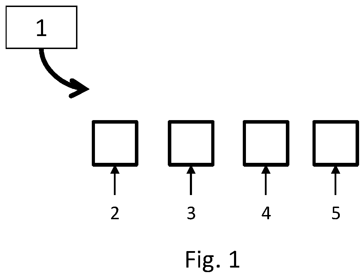

An example of an automation system 1 according to the present disclosure is described below with reference to figure 1.

The automation system 1 comprises a first controller 2, a second controller 3, at least an automation device 4, and a fieldbus 5.

The automation system 1 may comprise a unique automation device 4 associated with a plurality of axes, or may comprise a plurality of automation devices 4 associated with the plurality of axes. An automation device 4 of the plurality of automation devices 4 may be associated with one axis or with a sub-plurality of axes among the plurality of axes.

An axis of an automation device 4 may be defined, in the present disclosure, as an authorized displacement along a given direction of a part of the automation device or an authorized orientation along a given direction of a part of the automation device. An axis can be a real axis (physical axis) or a virtual axis.

An automation device 4 may be understood in the present disclosure as any kinds of electric or electronic devices which may be controlled to produce a motion along or around an axis. An automation device 4 may for example correspond to a servo drive.

The automation system 1 according to the present disclosure is configured such that different controllers (two controllers in the example system of figure 1) determine motion data of the plurality of axes associated with the at least an automation device 4 in a same fieldbus cycle. A controller is therefore associated with one or more axis among the plurality of axes and is configured to determine motion data of its one or more associated axis.

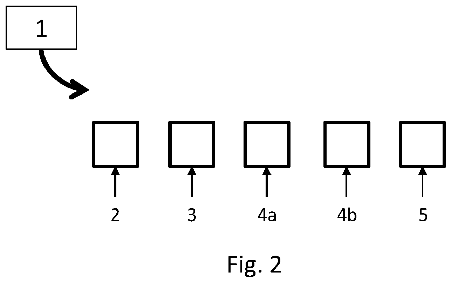

In some examples, an automation device 4 is a servo drive and is associated with one axis. In these examples and in examples wherein the automation system 1 comprises the first controller 2 and the second controller 3:
- the automation system 1 may comprise two servo drives 4a and 4b, and
- the first controller 2 may be configured to determine motion data of the axis associated with the first servo drive 4a while the second controller may be configured to determine motion data of the axis associated with the second servo drive 4b during a same fieldbus cycle. These examples are schematically illustrated in figure 2.

In some examples, the first controller 2 determines a leading axis, and the second controller determines a following axis. The leading axis corresponds to the first axis, among the plurality of axes, to be moved at a given cycle of fieldbus 5. A following axis therefore corresponds to any other axis, among the plurality of axes, which has to be moved after the leading axis at a given fieldbus cycle.

That is, in the examples of system 1 of the present disclosure, the automation system 1 corresponds to a distributed automation system, i.e. an automation system controlling a plurality of axes in which several controllers determine the motion data of the plurality of axes.

Hence, the automation system 1 according to the present disclosure is specifically configured to determine, via the controllers of the automation system 1, motion data of a plurality of axes associated with the at least an automation device 4.

A controller may correspond to a microcontroller, a microprocessor, a processor, or any type of computing devices or computing circuits. The controller may especially correspond to a programmable automation controller (PAC). The first controller 2 and the second controller 3 may therefore correspond to programmable automation controllers.

A controller (2, 3) may be associated with a memory and has access to the memory such that the controller may use the data stored in the memory.

The memory may be encoded with instructions executable by the controller causing the controller to perform computing motion data associated with an axis of an automation device.

A memory, or a computer-readable storage medium, according to this disclosure may be any electronic, magnetic, optical or other physical storage device that stores executable instructions. The memory or computer-readable storage may be, for example, a Random Access Memory (RAM), a storage drive, and optical disk, and the like. Storage or memory may include any electronic, magnetic, optical or other physical storage device that stores executable instructions as described hereby.

As explained before, the automation system 1 is configured to determine motion data of a plurality of axes associated with the at least an automation device 4. A special configuration of the automation system 1 according to the present disclosure is that, during a given cycle of the fieldbus 5:
- the first controller 2 is configured to determine motion data of a first axis of the plurality of axes; to transmit the motion data of the first axis to the second controller 3; and to transmit a trigger event enabling the second controller 3 to start determining motion data of a second axis of the plurality of axes; and
- upon receiving the trigger event, the second controller 3 is configured to determine the motion data of the second axis based on the motion data of the first axis.

That is, during a same fieldbus cycle, the motion data of the second axis can directly be determined based on the motion data of the first axis, such that the motion data associated with the second axis are valid, and does not need to be corrected by the motion data of the first axis, which is only available at the next fieldbus cycle in previous configurations of distributed automation systems.

The inventors have cleverly found out that the determination of motion data of an axis which requires motion data of another axis to be valid can be implemented, during a same fieldbus cycle, using a trigger event proceeding. Indeed, the software architectures of automation systems, for example the software architectures of the International Electrotechnical Commission (IEC) 61311 and the IEC61499 standards, allow transmitting trigger from a controller to another controller such that the other controller can start a computing protocol upon reception of the trigger event. Therefore, during a same cycle of fieldbus, a first controller can determine in a first place motion data of a given axis, and can transmit said motion data and a trigger event to all the controllers which require the motion data of the given axis to determine valid motion data of an associated axis. Then, the other controllers can determine valid motion data of their associated axes, upon receiving the trigger event, since these controllers now have access to the needed motion data of the given axis.

The time of a fieldbus cycle may therefore be dimensioned such that, each set of motion data associated with the plurality of axes to be determined is determined when the respective controllers determining these motion data have access, in their associated memory, to the motion data needed to perform a valid determination of the motion data of their associated axes during a same fieldbus cycle. We therefore understand that the time of a fieldbus cycle is determined based on the effective application of the automation system 1.

It should also be noted that when a given controller needs several set of motion data to determine a valid set of motion data of a specific axis, several trigger events provided by different other controllers may be needed for the given controller to start determining the set of motion data of the specific axis. Hence, although the disclosure presents a case in which the automation system 1 presents two controllers (2, 3), the person skilled in the art understands that the present teaching can be applied for more than two controllers and that the trigger event transmissions should be adapted depending on the architecture of the automation system.

In some examples, during the given cycle of the fieldbus in which the motion data are determined, the distributed automation system 1 may be configured to transmit a motion command associated with a respective axis, among the plurality of axes, to an automation device 4 of the automation system 1. Advantageously, the distributed automation system 1 may be configured to transmit a motion command associated with each axis of the plurality of axes to the at least an automation device 4. The motion command of the first axis may be determined based on the motion data of the first axis, or may correspond to the motion data of the first axis. The motion command of the second axis may be determined based on the motion data of the second axis or may correspond to the motion data of the second axis. Hence, in these examples, the motion commands of the axes are sent to the at least an automation device 4 during the given fieldbus cycle.

In some examples, the motion commands may be transmitted to the at least one automation device 4 using the fieldbus 5.

In some examples, a controller of the automation system 1 may be configured to transmit motion data of an associated axis and a trigger event to another controller using the fieldbus 5. In examples wherein the automation system 1 comprises the first controller 2 and the second controller 3, the first controller 2 may be configured to transmit the motion data of the first axis and the trigger event to the second controller 3 using the fieldbus 5.

The distributed automation system 1 may therefore comprise a unique bus (the fieldbus 5) for transmitting motion data and trigger events between the controllers, and for controlling the automation system 1.

In some examples, the automation system 1 may also comprise a network 6 connecting controllers of the automation system 1. The sets of motion data and the trigger events transmitted between the controllers may be transmitted using the network 6. In these examples, there is a dedicated bus (the network 6) for sending the trigger events and the motion data between the controllers, and a dedicated bus (the fieldbus 5) for controlling the automation system 1.

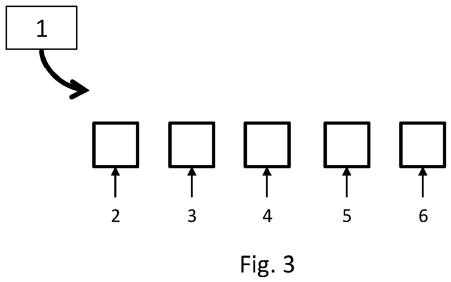

In examples wherein the automation system 1 comprises the first controller 2 and the second controller 3, the network 6 may connect the first controller 2 and the second controller 3. These examples are schematically illustrated in figure 3. In these examples, the first controller 2 may be configured to transmit the motion data of the first axis and the trigger event to the second controller 3 using the network 6.

In some examples, the network 6 connecting controllers of the automation system 1, for example connecting the first controller 2 and the second controller 3, may comprise Time-Sensitive-Networking (TSN) technologies. TSN technologies allow managing, using a same data bus, real-time and non-real-time data packets exchanges. Hence, non-real-time data, especially supervisory data, may also be transmitted using the network 6. These examples allow having a same bus to transfer the trigger events and the motion data between the controllers, as well as the supervisory data, which do not need to be transmitted in real-time. The network 6 therefore does not require a time control of the exchanged data packets as strict as the fieldbus 5 allowing controlling the automation system 1. Hence, in these examples, the configuration of the automation system 1 may be facilitated.

In some examples, each controller of the automation system 1 may be associated with a respective function block comprising programming instructions for determining the motion data of their associated axes. In these examples, a function block associated with a given controller which has to send motion data associated with a given axis may also comprise programming instructions for transmitting a motion data of the given axis to another controller; and transmitting a trigger event to the other controller. The trigger event may for example allow the other controller to start determining motion data of an axis, among the plurality of axes, based on the motion data of the given axis determined by the given controller.

Transmitting motion data of a given axis may correspond to write the motion data of the given axis in a memory associated with the other controller.

Transmitting a trigger event enabling another controller to start determining motion data of an axis of the plurality of axes may correspond to write the trigger event in a memory associated with the other controller.

In examples wherein the automation system 1 comprises the first controller 2 and the second controller 3, the first controller 2 may be associated with a first function block comprising programming instructions for determining the motion data of the first axis of the plurality of axes; transmitting the motion data of the first axis to the second controller; and transmitting a trigger event enabling the second controller to start determining the motion data of the second axis of the plurality of axes. In these examples, the memory associated with the first controller 2 may be encoded with instructions executable by the first controller 2 causing the first controller 2 to perform, during a same cycle of fieldbus:
determining motion data of the first axis among the plurality of axes;
sending the motion data of the first axis to the second controller 3; and
transmitting a trigger event enabling the second controller 3 to start determining motion data of the second axis of the plurality of axes.

In some examples, a function block of a controller of the automation system 1 which has to determine motion data of a given axis, based on motion data of another axis, may comprise programming instructions for, upon receiving a trigger event from another controller, obtaining motion data of the other axis and determining motion data of the given axis based on the motion data of the other axis.

Obtaining the motion data of a given axis by a given controller may correspond to read the motion data of the given axis in a memory associated with the given controller.

In examples wherein the automation system 1 comprises the first controller 2 and the second controller 3, the second controller 3 may be associated with a second function block comprising programming instructions for, upon receiving a trigger event from the first controller 2, obtaining the motion data of the first axis of the plurality of axes and determining motion data of the second axis based on the motion data of the first axis. In these examples, the memory associated with the second controller 3 may be encoded with instructions executable by the second controller 3 causing the second controller 3 to perform, during a same cycle of fieldbus, and upon receiving a trigger event from the first controller: obtaining motion data of the first axis; and
determining motion data of the second axis among the plurality of plurality of axes, based on the obtained motion data of the first axis.

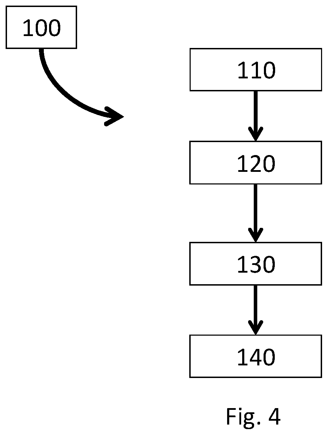

The present disclosure also presents a computer-implemented method allowing determining valid motion data of the plurality of axes during a given fieldbus cycle. An example of computer-implemented method 100 according to the present disclosure is described below with reference to figure 4. The example of computer-implemented method 100 is implemented in the examples of automation systems 1 presented hereby, during a given cycle of fieldbus.

As illustrated in block 110, the method 100 comprises determining, by the first controller 2, motion data of a first axis of the plurality of axes.

As illustrated in block 120, the method 100 comprises transmitting, by the first controller 2, the motion data of the first axis to the second controller 3.

As illustrated in block 130, the method 100 comprises transmitting, by the first controller 2, a trigger event enabling the second controller 3 to start determining motion data of a second axis of the plurality of axes.

As illustrated in block 140, the method 100 comprises, upon receiving the trigger event, determining, by the second controller 3, the motion data of the second axis based on the motion data of the first axis.

The example method 100 schematically illustrated in figure 4 may comprise other blocks allowing the method 100 to control an automation system 1 according to any one of the examples described in the present disclosure.

The present disclosure also presents a computer-readable storage medium comprising instructions which, when executed by at least one controller, cause the controller to control an automation system 1 according to any one of the examples presented hereby or to implement any examples of methods described herein.

The present disclosure also describes a computer program product comprising instructions which, when the program is executed by a computer, cause the computer to control an automation system 1 according to any one of the examples hereby described or to implement any examples of methods described herein.

Hence, the automation system 1 and method 100 according to the present disclosure allows determining valid motion data associated with the plurality of axes to be controlled during a given fieldbus cycle in a context of a distributed automation system. The ingenious configuration of the automation system 1, by using trigger event proceedings, allows controllers, during a same fieldbus cycle, to start determining motion data of their associated axes once they have received motion data of other axes required to determine valid motion data of their associated axes. That is, the automation system 1 according to the present disclosure at least reduces and even removes the unnecessary fieldbus cycles which was required, in previous configurations of automation systems, to determine valid motion data of axes when the motion data of these axes should consider motion data of other axes to be validly determined.

## Claims

1. An automation system (1) comprising a first controller (2), a second controller (3), at least an automation device (4), and a fieldbus (5);
wherein the automation system (1) is configured to determine motion data of a plurality of axes associated with the at least an automation device (4); and
wherein, during a given cycle of the fieldbus (5):
- the first controller (2) is configured to determine motion data of a first axis of the plurality of axes; to transmit the motion data of the first axis to the second controller (3); and to transmit a trigger event enabling the second controller (3) to start determining motion data of a second axis of the plurality of axes; and
- upon receiving the trigger event, the second controller (3) is configured to determine the motion data of the second axis based on the motion data of the first axis.

2. The system according to the preceding claim, wherein, during the given cycle of the fieldbus, the system (1) is configured to transmit a respective motion command associated with a respective axis to the at least an automation device (4), wherein the motion command of the first axis is determined based on the motion data of the first axis, and wherein the motion command of the second axis is determined based on the motion data of the second axis.

3. The system according to the preceding claim, wherein the motion commands are transmitted to the at least one automation device (4) using the fieldbus (5).

4. The system according to any one of the preceding claims, wherein the first controller (2) is configured to transmit the motion data of the first axis and the trigger event to the second controller (3) using the fieldbus (5).

5. The system according to any one of the claims 1 to 3, further comprising a network (6) connecting the first controller (2) and the second controller (3), and wherein the first controller (2) is configured to transmit the motion data of the first axis and the trigger event to the second controller (3) using the network (6).

6. The system according to the preceding claim, wherein the network connecting the first (2) and the second (3) controllers comprises Time-Sensitive-Networking (TSN) technologies, such that non-real-time data, especially supervisory data, are also transmitted using the network (6).

7. The system according to any one of the preceding claims, wherein the first controller (2) is associated with a first function block comprising programming instructions for determining the motion data of the first axis of the plurality of axes; transmitting the motion data of the first axis to the second controller (3); and transmitting a trigger event enabling the second controller (3) to start determining motion data of the second axis of the plurality of axes.

8. The system according to any one of the preceding claims, wherein the second controller (3) is associated with a second function block comprising programming instructions for, upon receiving a trigger event from the first controller (2), obtaining the motion data of the first axis of the plurality of axes and determining the motion data of the second axis based on the motion data of the first axis.

9. The system according to any one of the preceding claims, wherein the first controller (2) and the second controller (3) are programmable automation controllers.

10. A computer-readable storage medium comprising instructions which, when executed by at least one controller, cause the at least one controller to control an automation system according to any one of the above claims.

11. A computer program product comprising instructions which, when the program is executed by a computer, cause the computer to control an automation system according to any one of the above claims.

12. A computer-implemented method (100), implemented in an automation system (1) comprising a first controller (2), a second controller (3), at least an automation device (4) associated to a plurality of axes, and a fieldbus (5);
the method (100) comprising, during a given cycle of the fieldbus (5):
determining (110), by the first controller (2), motion data of a first axis of the plurality of axes;
transmitting (120), by the first controller, the motion data of the first axis to the second controller (3);
transmitting (130), by the first controller (2), a trigger event enabling the second controller (3) to start determining motion data of a second axis of the plurality of axes; and
upon receiving the trigger event, determining (140), by the second controller (3), the motion data of the second axis based on the motion data of the first axis.
